# EUROPÄISCHE PATENTSCHRIFT

(11) **EP 2 247 848 B1**
(45) Veröffentlichungstag und Bekanntmachung des Hinweises auf die Patenterteilung: **25.11.2015**
(21) Anmeldenummer: 09715105.4
(22) Anmeldetag: 23.02.2009
(51) Int. Cl.: F02M 61/16, B21D 1/00, B23K 26/28, C21D 9/50

(54) **VERFAHREN ZUM RICHTEN EINES LANGGESTRECKTEN BAUTEILS**
METHOD FOR ALIGNING AN ELONGATED COMPONENT
PROCÉDÉ POUR ALIGNER UN ÉLÉMENT ALLONGÉ

(30) Priorität: 25.02.2008 DE 102008010976
(43) Veröffentlichungstag der Anmeldung: 10.11.2010
(73) Patentinhaber: Robert Bosch GmbH, 70442 Stuttgart (DE)
(72) Erfinder: BORMANN, Axel, 96049 Bamberg (DE); BAYER, Johann, 96129 Strullendorf (DE)
(86) Internationale Anmeldenummer: PCT/EP2009/052117
(87) Internationale Veröffentlichungsnummer: WO 2009/106505

(56) Entgegenhaltungen:
- DE-A1- 1 627 490
- DE-A1- 19 752 028
- US-A- 2 428 825
- US-A- 5 737 957
- US-A1- 2002 108 427

## Beschreibung

### Stand der Technik

Die Erfindung geht aus von einem Verfahren zum Richten eines langgestreckten Bauteils, das mit mindestens zwei Bauteilabschnitten in zwei voneinander beabstandeten, koaxialen Einbaustellen einzupassen ist.

Kraftstoffeinspritzanlagen für mehrzylindrische Brennkraftmaschinen weisen Kraftstoffeinspritzventile, von denen jeweils eines einem Verbrennungszylinder der Brennkraftmaschine zugeordnet ist, und einen mit den Kraftstoffeinspritzventilen verbundenen Kraftstoffverteiler auf, über den unter Hochdruck stehender Kraftstoff den Kraftstoffeinspritzventilen zugeführt wird. Die Kraftstoffeinspritzventile sind üblicherweise in Bohrungen im Zylinderkopf eingepasst und ragen mit einem vom Ventilsitzträger gebildeten Ventilhals in einen Brennraum eines Verbrennungszylinders der Brennkraftmaschine hinein. Davon abgekehrt ragen langgestreckte rohrförmige Kraftstoff-Anschlussstutzen der Kraftstoffeinspritzventile aus den Zylinderkopfbohrungen heraus und sind in Rohrstutzen des Kraftstoffverteilers eingepasst. Die Achsen der Rohrstutzen sind koaxial zu den Achsen der Zylinderkopfbohrungen ausgerichtet. Für die Montage der Kraftstoffeinspritzventile ist es daher zwingend erforderlich, dass der in der Zylinderkopfbohrung aufgenommene Abschnitt des Kraftstoffeinspritzventils und der in den Rohrstutzen einzusetzende Abschnitt des Kraftstoffeinspritzventils exakt koaxial ausgerichtet sind, damit bei der automatisierten Montage der Kraftstoffverteiler mit seinen Rohrstutzen auf die Anschlussstutzen der in den Zylinderkopfbohrungen festgelegten Kraftstoffeinspritzventile aufgesetzt werden kann.

Üblicherweise werden wegen des extremen Verhältnisses der Länge zum Durchmesser der Kraftstoffeinspritzventile der rohrförmige Ventilsitzträger und der rohrförmige Anschlussstutzen aus zwei getrennten Hülsen gefertigt, die stoffschlüssig miteinander verbunden werden. Der Stoffschluss wird dabei vorzugsweise durch Schweißen erzielt, indem an der Stoßstelle der beiden Hülsen eine umlaufende Schweißnaht hergestellt wird. Beim Verschweißen verziehen sich jedoch die beiden Hülsen, so dass die Koaxialität zwischen den beiden einerseits in der Zylinderkopfbohrung und andererseits in dem Rohrstutzen des Kraftstoffverteilers eingespannten Ventilabschnitte, der sogenannte Rundlauf, nicht mehr mit geforderter Genauigkeit gegeben ist. Bei einem bekannten Verfahren zum Zusammenschweißen zweier Zylinderelemente, z.B. eines Ventilelements und eines Magnetankers eines Kraftstofeinspritzventils, werden zur Vermeidung der Verformung der Zylinderelemente durch das Schweißen die beiden formschlüssig ineinandergesetzten, hohlen Zylinderelemente beim Schweißen um ihre Mittelachse gedreht und die Schweißung mit zwei um 90° zueinander am Umfang versetzten Energiequellen durchgeführt. Dabei werden die Zylinderelemente abschnittsweise von der ersten Energiequelle ein erstes Mal geschmolzen und geschweißt und von der zweiten Energiequelle ein zweites Mal geschmolzen und geschweißt.

Aus der DE 197 52 028 A1 ist bereits ein Verfahren zur Justierung des Ventilnadelhubs bei Dosierventilen, insbesondere bei Brennstoffeinspritzventilen bekannt. In derartigen Einspritzventilen wird der Hub der Ventilnadel durch einen im Ventilgehäuse angeordneten Ventilsitz mit einer zum Schließen des Ventils dienenden Ventilsitzfläche und einen mit dem Ventilgehäuse verbundenen Anschlag, üblicherweise der Ankeranschlagfläche am Innenpol begrenzt. Bei dem bekannten Verfahren wird der Hub der Ventilnadel zunächst mit einem Übermaß vorgegeben. Dann wird die Feineinstellung des Hubs der Ventilnadel durch eine gezielte Schrumpfung der axialen Länge des Ventilgehäuses im Bereich zwischen dem Ventilsitz und dem Anschlag vorgenommen. Die Schrumpfung erfolgt dabei durch lokales Erhitzen und anschließendes Abkühlen des Ventilgehäuses. Zum lokalen Aufschmelzen werden am Umfang des Ventilgehäuses gezielt Schweißpunkte und/oder Schweißnähte gesetzt bzw. gelegt.

Aus der DE 1 627 490 A ist bereits ein Verfahren zur Herstellung von Bögen aus Rohren oder Hohlkörpern durch Stauchung mehrerer angewärmter Abschnitte in axialer Richtung an der Bogeninnenseite bekannt. Dabei wird zuerst ein Bogeninnenabschnitt bis zur Erweichung des Werkstoffs dieses Abschnittes erwärmt, daran anschließend wird ein entsprechender Bogenaußenabschnitt erwärmt, während dann nach dem Herstellen des gewünschten Bogens der die beiden Bogenabschnitte beinhaltende Gesamtabschnitt wieder auskühlt.

Aus der US5737957 ist bereit ein Verfahren zum Richten von Rohre durch lokale Erhitzung und Abschrecken bekannt.

Die US 2002/0108427 A1 offenbart bereits ein Verfahren zum Biegen von Blechen durch eine lokale Stoffaufschmelzung, die mittels Laserstrahlung erzielt wird.

### Offenbarung der Erfindung

Das erfindungsgemäße Verfahren zum Richten eines langgestreckten Bauteils hat den Vorteil, dass eine im Bauteil vorhandene Nichtkoaxialität zwischen den für die Verbauung des Bauteils vorgesehenen Einbaubereichen am Bauteil, die z.B. beim Fügen und Zusammenschweißen zweier Bauteilstücke entsteht, in fertigungstechnisch einfacher Weise eliminiert werden kann. Dabei wird eine auf die Länge des Bauteils bezogenen Rundlaufgenauigkeit, also Koaxialität zwischen den Achsen der beiden Einbaubereiche des Bauteils, erzielt. Z.B. ist bei Kraftstoffeinspritzventilen, bei denen das aus Ventilsitzträger und Anschlussstutzen zusammengesetzte, rohrförmige Bauteil mindestens eine am Ventilsitzträger und eine nahe dem freien Ende des Anschlussstutzens vorgesehenen Einbauabschnitt aufweist, mit dem erfindungsgemäßen Verfahren eine Genauigkeit des Rundlaufs von 50 bis 150 µm bei einem Abstand der Einbauabschnitte am Bauteil von ca. 100 mm darstellbar.

Durch die in den weiteren Ansprüchen aufgeführten Maßnahmen sind vorteilhafte Weiterbildungen und Verbesserungen des im Anspruch 1 angegebenen Verfahrens möglich.

### Kurze Beschreibung der Zeichnungen

Die Erfindung ist anhand von in den Zeichnungen dargestellten Ausführungsbeispielen in der nachfolgenden Beschreibung näher erläutert. Es zeigen
- Fig. 1: einen Längsschnitt eines Kraftstoffeinspritzventils für Brennkraftmaschinen mit einem aus einem hohlzylindrischen Anschlussstutzen und einem hohlzylindrischen Ventilsitzträger zusammengesetzten, langgestreckten Bauteil,
- Fig. 2: einen Längsschnitt des Bauteils in Fig. 1 in Fügestellung von Anschlussstutzen und Ventilsitzträger,
- Fig. 3: eine gleiche Darstellung wie in Fig. 2 nach stoffschlüssigem Verbinden von Anschlussstutzen und Ventilsitzträger,
- Fig. 4: eine gleiche Darstellung wie in Fig. 3 nach Richten des Bauteils,
- Fig. 5: eine gleiche Darstellung wie in Fig. 2 mit modifizierter Fügung von Anschlussstutzen und Ventilsitzträger,
- Fig. 6: eine Seitenansicht eines aus Anschlussstutzen und Ventilsitzträger zusammengesetzten Bauteils mit einem den Ventilsitzträger bereichsweise umschließenden Elektromagneten eines Kraftstoffeinspritzventils gemäß einem weiteren Ausführungsbeispiel.

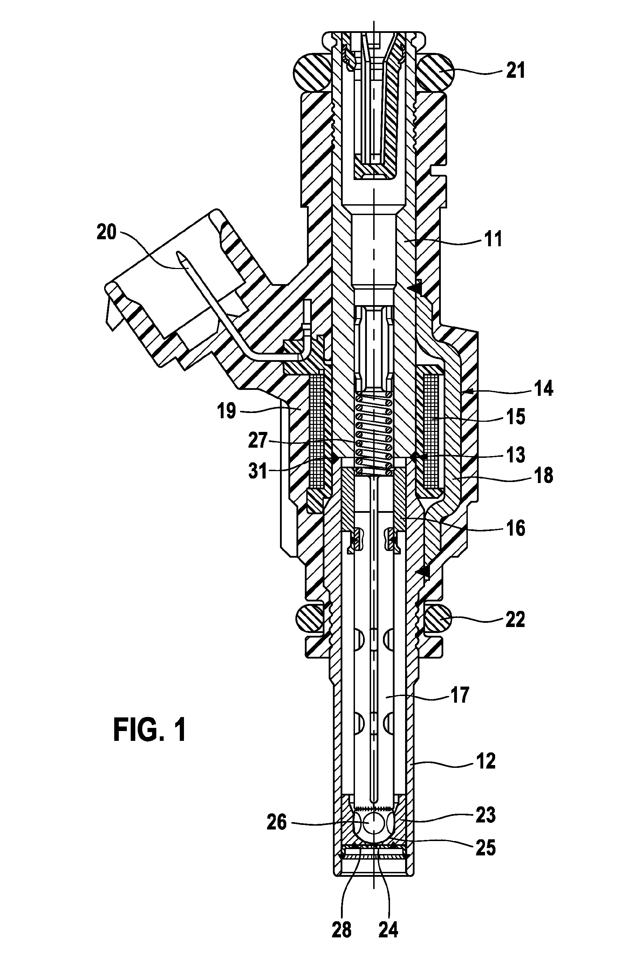

Das in Fig. 1 im Längsschnitt dargestellte, elektromagnetisch betätigte Kraftstoffeinspritzventil weist einen hohlzylindrischen Anschlussstutzen 11 und einen stirnseitig an diesen angesetzten hohlzylindrischen Ventilssitzträger 12 auf, die stoffschlüssig zu einem langgestreckten, rohrförmigen Bauteil 13 zusammengesetzt sind. In dem beschriebenen Ausführungsbeispiel ist der Stoffschluss durch eine an der Stossstelle von Anschlussstutzen 11 und Ventilsitzträger 12 umlaufende Schweißnaht 31 hergestellt. Das rohrförmige Bauteil 13 ist im Bereich der Stossstelle von einem Elektromagneten 14 umgeben, der eine Magnetspule 15 einen Anker 16 und einen Magnettopf 18 aufweist. Der Anker 16 ist im Ventilsitzträger 12 axial verschieblich geführt und mit einer Ventilnadel 17 fest verbunden. Zwischen dem Anker 16 und dem diesen axial gegenüberliegenden Stirnende des Anschlussstutzens 11 ist ein Arbeitsluftspalt des Elektromagneten 14 vorhanden. Der den elektromagnetischen Kreis über den Anker 16 schließende Magnettopf 18 ist außen auf dem Anschlussstutzen und dem Ventilsitzträger 12 festgelegt. Anschlussstutzen 11, Elektromagnet 14 und teilweise der Ventilsitzträger 12 sind von einem Kunststoffgehäuse 10 umgossen, in dem ein elektrischer Anschlussstecker 20 für die Magnetspule 15 integriert ist. Das Kraftstoffeinspritzventil ist in eine Zylinderkopfbohrung einer Brennkraftmaschine eingesetzt, die als Stufenbohrung ausgeführt ist, wobei das Kunststoffgehäuse 10 im Bereich des Elektromagneten 14 an der Bohrungswand des durchmessergrößeren Bohrungsabschnitts anliegt und eine im Bereich des Ventilsitzträgers 12 auf dem Kunststoffgehäuse 10 angeordneter Dichtungsring 22 das Kraftstoffeinspritzventil gegenüber der Bohrungswand des durchmesserkleineren Bohrungsabschnitts abdichtet. Der teilweise in den Brennraum eines Verbrennungszylinders der Brennkraftmaschine hineinragende Ventilsitzträger 12 trägt in seinem freien Ende einen Ventilkörper 23, in den eine Ventilöffnung 24 und ein die Ventilöffnung 24 umgebender Ventilsitz 25 eingearbeitet sind. Der Ventilkörper 23 ist zusammen mit einer Spritzlochscheibe 28 am Ventilsitzträger 12 verschweißt. An das vom Anker 16 abgekehrte Ende der Ventilnadel 17 ist mit dem Ventilsitz 25 zusammenwirkender, kugelförmiger Schließkörper 26 angeschweißt, der über die Ventilnadel 17 von einer im Anschlussstutzen 11 sich abstützenden Ventilschließfeder 27 auf den Ventilsitz 25 aufgepresst wird. Die Spritzlochscheibe 28 weitet die bei sich vom Ventilsitz 25 abhebendem Schließkörper 26 aus der Ventilöffnung 24 abgespritzte Kraftstoffmenge zu einem fächerartigen Kraftstoffstrahl auf.

Das Kraftstoffeinspritzventil ist mit seinem anschlussstutzenseitigem freien Ende in einen Rohrstutzen eines hier nicht dargestellten Kraftstoffverteilers eingesetzt und mittels eines Dichtungsrings 21, der sich an die Stirnseite des Kunststoffgehäuses 19 abstützt, gegen die Rohrwand des Rohrstutzens abgedichtet. Für eine einwandfreie Einpassung des Einspritzventils in die Zylinderkopfbohrung einerseits und in den Rohrstutzen des Kraftstoffverteilers andererseits ist es erforderlich, dass die Einspannbereiche des Kraftstoffeinspritzventils in Zylinderkopfbohrung und Rohrstutzen koaxial ausgerichtet sind. Um diese Koaxialität zu gewährleisten, müssen die Achsen 111, 121 von Anschlussstutzen 11 und Ventilsitzträger 12 miteinander fluchten, zumindest aber die Bereiche des aus Anschlussstutzen 11 und Ventilsitzträger 12 zusammengesetzten Bauteils 13 die in Rohrstutzen und Zylinderkopfbohrung festgelegt werden, koaxial ausgerichtet sein. Da bei Zusammenschweißen von Anschlussstutzen 11 und Ventilsitzträger 12 zu dem Bauteil 13 üblicherweise ein Verzug auftritt, ist diese Koaxialität, der sog. Rundlauf, nicht gewährleistet und wird durch an das Schweißen sich anschließendes Richten des Bauteils hergestellt. Hierzu wird wie folgt vorgegangen:

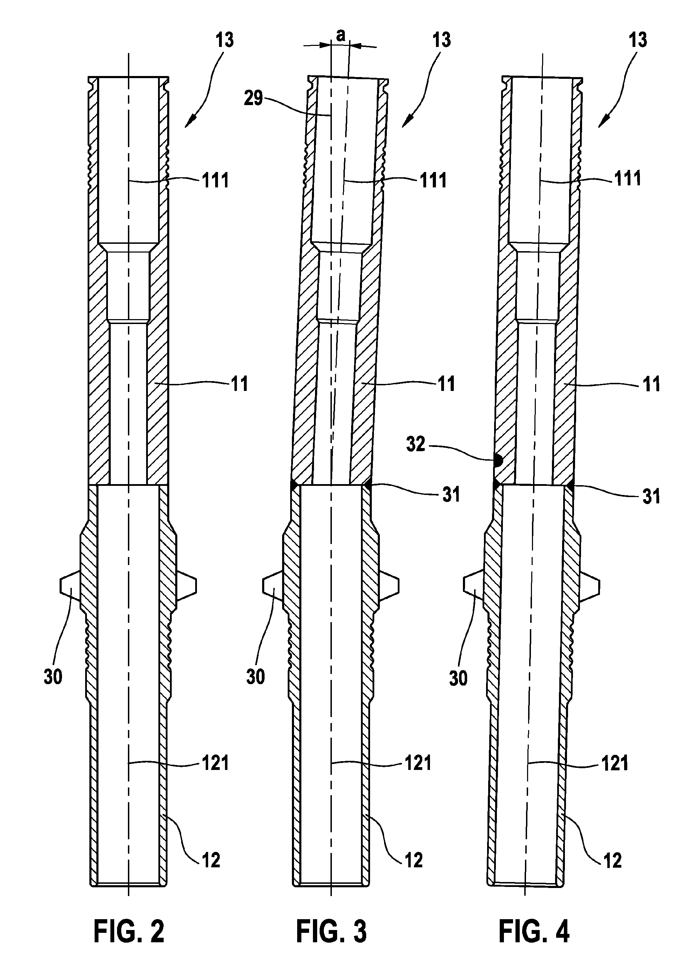

Der Ventilsitzträger 12 wird in Spannbacken 30 einer Haltevorrichtung eingespannt (Fig. 2). Dann werden Anschlussstutzen 11 und Ventilsitzträger 12 gefügt, wozu der Anschlussstutzen 11 stirnseitig stumpf auf den eingespannten Ventilsitzträger 12 aufgesetzt wird. Mittels einer Schweißvorrichtung, z.B. eines Schweißlasers, werden Anschlussstutzen 11 und Ventilsitzträger 12 an ihrer Schnittstelle längs des Umfangs miteinander verschweißt. Die dabei entstehende umlaufende Schweißnaht ist in Fig. 3 und 4 mit 31 gekennzeichnet. Beim Verschweißen verzieht sich in der Regel der Anschlussstutzen 11, und es entsteht ein Versatz oder eine Auslenkung a der Achse 111 des Anschlussstutzens 11 gegenüber der mit der Achse 121 des Ventilssitzträgers 12 koaxialen Fluchtlinie 23 (Fig. 3). Nach Abkühlen der Schweißstelle wird die Auslenkung a in Größe und Richtung vermessen. In einem zur Richtung der Auslenkung a diametralen Oberflächenbereich des aus Anschlussstutzen 11 und Ventilsitzträger 12 bestehenden Bauteils 13 zwischen den Bauteilabschnitten, die zum Festlegen in Rohrstutzen des Kraftstoffverteilers und in der Zylinderkopfbohrung dienen, wird eine radial und in Umfangsrichtung begrenzte Stoffaufschmelzung 32 in einer solchen Größe erzeugt, dass die beim Erkalten der Stoffaufschmelzung 32 einsetzende, axiale Schrumpfung die gemessene Auslenkung a rückgängig macht, so dass die zum Einpassen in Rohrstutzen des Kraftstoffverteilers und Zylinderkopfbohrung dienenden Bauteilabschnitte wieder miteinander in tolerierbaren Grenzen koaxial sind. In dem in Figur 3 und 4 gezeigten Ausführungsbeispiel wird die Stoffaufschmelzung 32 im Oberflächenbereich des Anschlussstutzens 11 nahe der Schweißnaht 31 erzeugt, so dass nach Erkalten der Stoffaufschmelzung die Achsen 111 und 121 von Anschlussstutzen 11 und Ventilsitzträger 12 wieder miteinander fluchten, wie dies in Fig. 4 dargestellt ist. Die partielle Stoffaufschmelzung 32 wird vorzugsweise mittels eines Lasers erzeugt. Die Lage der Stoffaufschmelzung, die Schmelztiefe und die in Umfangsrichtung gesehene Länge der Stoffaufschmelzung 32 wird einem Kennfeld entnommen, in dem diese Werte in Zuordnung von Richtung und Größe der Auslenkung a abgelegt sind. Das Kennfeld ist empirisch ermittelt worden. Führt eine erste wie beschrieben durchgeführte Stoffaufschmelzung 32 noch nicht zu dem gewünscht Ergebnis, so wird mindestens eine weitere Stoffaufschmelzung in geringem Abstand (in Umfangsrichtung gesehen) von der ersten Stoffaufschmelzung 32 durchgeführt.

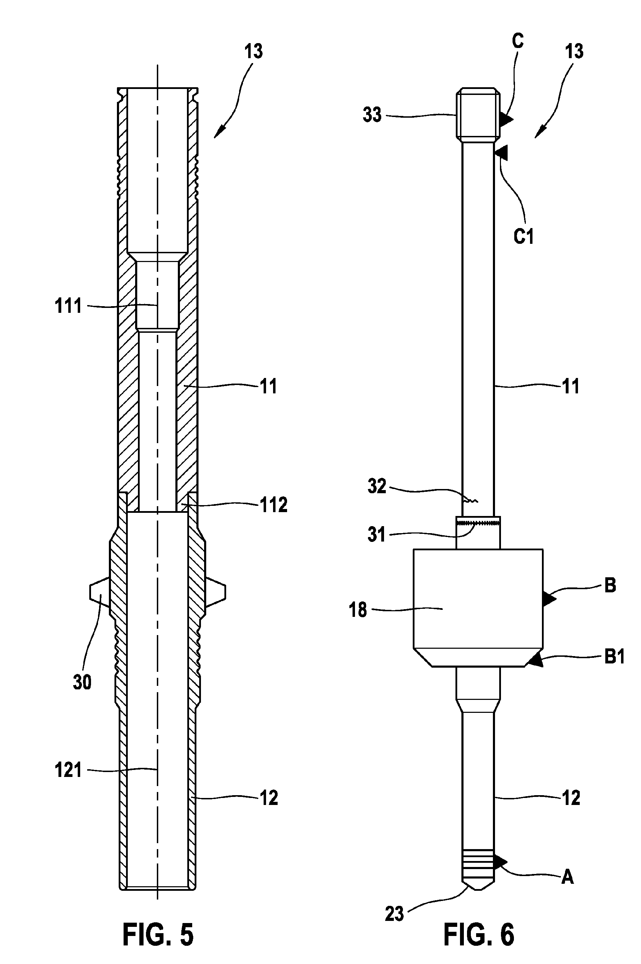

Bei dem in Fig. 5 im Längsschnitt dargestellten Ausführungsbeispiel des Bauteils 13, das wiederum aus Anschlusstutzen 11 und Ventilsitzträger 12 zusammengesetzt ist, ist deren Fügung vor dem stoffschlüssigen Verbinden modifiziert. Anschlussstutzen 11 und Ventilsitzträger 12 sitzen nicht mehr stumpf aufeinander, vielmehr taucht der Anschlussstutzen 11 mit einem im Durchmesser reduzierten Endabschnitt 112 formschlüssig in den Ventilsitzträger 12 ein. Die stoffschlüssige Verbindung, hier wiederum Verschweißen, erfolgt im Überlappungsbereich von Anschlussstutzen 11 und Ventilsitzträger 12. Ein nach Verschweißen sich einstellenden Verzug des Bauteils 13 wird in der vorstehend beschriebenen Weise kompensiert.

In Fig. 6 ist ein weiteres Ausführungsbeispiel eines gerichteten, langgestreckten Bauteils 13 in Seitenansicht dargestellt. Das Bauteil ist wiederum aus einem rohrförmigen Anschlussstutzen 11 und einem rohrförmigen Ventilsitzträger 12 zusammengesetzt, die im Bereich der Schweißnaht 31 stoffschlüssig miteinander verbunden sind. Der Ventilsitzträger 12 ist bereichsweise von dem Elektromagneten 14 umschlossen, dessen Magnetgehäuse 18 an dem Ventilsitzträger 12 angeschweißt ist. In der späteren Verwendung als Kraftstoffeinspritzventil wird das Bauteil 13 an den mit A und B oder mit A und B1 in Fig. 6 gekennzeichneten Stellen in der Zylinderkopfbohrung festgelegt, wodurch die Achse 121 des Ventilsitzträgers 12 koaxial mit der Bohrungsachse ausgerichtet ist. Weiterhin wird das Bauteil 13 in dem mit C gekennzeichneten Bauteilabschnitt im Rohrstutzen des Kraftstoffverteilers festgelegt und weist hierzu einen am Ende des Anschlussstutzen 11 ausgebildeten Außengewindeabschnitt 33 zum Einschrauben in den mit einem Innengewinde versehenen Rohrstutzen des Kraftstoffverteilers auf. Ein Beispiel eines solchen Kraftstoffverteilers findet sich in der EP 1 359 317 A1. Da beim Anschweißen des Anschlussstutzens 11 an den Ventilsitzträger 12 sich das Bauteil verzieht, ist es notwendig, das Bauteil 13 so zu richten, dass der Bauteilabschnitt C koaxial mit dem Bauteilabschnitt zwischen den Einspannstellen A und B bzw. A und B1, also im wesentlichen koaxial mit der Achse 121 des Ventilssitzträgers 12 ausgerichtet ist. Dies wird wiederum mit der in dem Oberflächenbereich des Bauteils 13 mittels Laser erzeugten Stoffaufschmelzung 32 erzielt, die in das Bauteil 13 im Bereich zwischen dem Bauteilabschnitt C und dem Bauteilabschnitt B/A bzw. B1/A eingebracht worden ist. Der Rundlauf des Bauteils 13 wird an der Stelle C1 in Fig. 6 gemessen.

Das beschriebene Richtverfahren ist nicht auf das Zusammenschweißen eines Anschlussstutzens und eines Ventilsitzträgers für ein Kraftstoff-Einspritzventil beschränkt. Vielmehr können beliebige Rohre oder Hülsen oder sonstige langgestreckte Elemente miteinander stoffschlüssig verbunden und anschließend in der beschriebenen Weise gerichtet werden. In gleicher Weise können auch einteilige langgestreckte Bauteile, die über ihre Länge einen Verzug aufweisen in der beschriebenen Weise gerichtet werden.

## Patentansprüche

1. Verfahren zum Richten eines langgestreckten Bauteils (13), das mit mindestens zwei Bauteilabschnitten in zwei voneinander beabstandeten, koaxialen Einbaustellen einzupassen ist, wobei die Koaxialität der Bauteilabschnitte geprüft und eine vorhandene Abweichung (a) von der Koaxialität vermessen wird, **dadurch gekennzeichnet, dass** in einem zwischen den Bauteilabschnitten liegenden Oberflächenbereich des Bauteils (13) mindestens eine radial und in Umfangsrichtung begrenzte Stoffaufschmelzung (32) in einer solchen Größe erzeugt wird, dass durch die beim Erkalten der Stoffaufschmelzung (32) einsetzende, axiale Schrumpfung die Koaxialität der Bauteilabschnitte zumindest in tolerierbaren Grenzen hergestellt wird.

2. Verfahren nach Anspruch 1, **dadurch gekennzeichnet, dass** die Abweichung (a) von der Koaxialität in Größe und radialer Richtung gemessen wird und die Erzeugung der mindestens einen Stoffaufschmelzung (32) in dem zur gemessenen Richtung der Abweichung (a) diametralen Oberflächenbereich des Bauteils (13) durchgeführt wird.

3. Verfahren nach Anspruch 1 oder 2, **dadurch gekennzeichnet, dass** mehrere Stoffaufschmelzungen (32) in Abstand von einander in Umfangsrichtung nebeneinander erzeugt werden.

4. Verfahren nach einem der Ansprüche 1 bis 3, **dadurch gekennzeichnet, dass** die Erzeugung der mindestens einen Stoffaufschmelzung (32) mit einem Laser durchgeführt wird.

5. Verfahren nach einem der Ansprüche 1 bis 4, **dadurch gekennzeichnet, dass** das langgestreckte Bauteil (13) aus mindestens zwei aneinandergefügten Stücken besteht, die stoffschlüssig miteinander verbunden sind, und dass die mindestens eine Stoffaufschmelzung (32) nahe der Verbindungsstelle der beiden Bauteilstücke erzeugt wird.

6. Verfahren nach Anspruch 5, **dadurch gekennzeichnet, dass** das Fügen der Bauteilstücke durch stumpfes Aufsetzen der einander zugekehrten Stirnflächen der Bauteilstücke vorgenommen wird.

7. Verfahren nach Anspruch 5, **dadurch gekennzeichnet, dass** das Fügen der Bauteilstücke durch formschlüssiges Auf- oder Einstecken des einen Bauteilstücks auf bzw. in das andere Bauteilstück vorgenommen wird.

8. Verfahren nach einem der Ansprüche 5 bis 7, **dadurch gekennzeichnet, dass** die Bauteilstücke Hohlzylinder, wie Rohre oder Hülsen sind.

9. Verfahren nach einem der Ansprüche 5 bis 8, **dadurch gekennzeichnet, dass** die stoffschlüssige Verbindung zwischen den Bauteilstücken durch Schweißen hergestellt wird.

10. Verfahren nach einem der Ansprüche 5 bis 9, **dadurch gekennzeichnet, dass** als miteinander zu fügende und stoffschlüssig zu verbindende Bauteilstücke ein hohlzylindrischer Anschlussstutzen (11) und ein hohlzylindrischer Ventilsitzträger (12), der bereichsweise von einem Elektromagneten (14) mit Magnetgehäuse (18) umschlossen ist, eines Kraftstoffeinspritzventils verwendet werden und dass die einzupassenden Bauteilabschnitte einerseits dem freien Ende des Anschlussstutzens (11) und andererseits dem Magnetgehäuse (18) und den vom Magnetgehäuse (18) abgekehrten Ende des Ventilsitzträgers (12) zugeordnet werden.

## Claims

1. Method for aligning an elongated component (13) of which at least two component sections are to be fitted into two mutually separated coaxial insertion locations, wherein the coaxiality of the component sections is checked and any deviation (a) from the coaxiality is measured, **characterized in that** in a surface region, between the component sections, of the component (13), there is generated at least one material melt (32) which is bounded radially and in the circumferential direction and which is of such a size that the axial shrinkage occurring on cooling of the material melt (32) produces the coaxiality of the component sections at least within tolerable limits.

2. Method according to Claim 1, **characterized in that** the deviation (a) from the coaxiality is measured in terms of magnitude and radial direction and the generation of the at least one material melt (32) is carried out **in that** surface region of the component (13) diametrically opposed to the measured direction of the deviation (a).

3. Method according to Claim 1 or 2, **characterized in that** multiple material melts (32) are generated next to one another and at a distance from one another in the circumferential direction.

4. Method according to one of Claims 1 to 3, **characterized in that** the generation of the at least one material melt (32) is carried out with a laser.

5. Method according to one of Claims 1 to 4, **characterized in that** the elongated component (13) consists of at least two pieces which are joined together and which are material-bonded to one another, and **in that** the at least one material melt (32) is generated close to the connection point of the two component pieces.

6. Method according to Claim 5, **characterized in that** the joining of the component pieces is undertaken by abutting the mutually facing end faces of the component pieces.

7. Method according to Claim 5, **characterized in that** the joining of the component pieces is undertaken by fitting one component piece into or onto the other component piece in a form-fitting manner.

8. Method according to one of Claims 5 to 7, **characterized in that** the component pieces are hollow cylinders such as tubes or sleeves.

9. Method according to one of Claims 5 to 8, **characterized in that** the material bond between the component pieces is produced by welding.

10. Method according to one of Claims 5 to 9, **characterized in that** a hollow-cylindrical connection pipe (11) and a hollow-cylindrical valve seat support (12), which is enclosed in certain regions by an electromagnet (14) having a magnet casing (18), of a fuel injection valve are used as the component pieces to be joined together and material-bonded together, and **in that** the component sections which are to be fitted are assigned on one hand to the free end of the connection pipe (11) and on the other hand to the magnet casing (18) and to that end of the valve seat support (12) oriented away from the magnet casing (18).

## Revendications

1. Procédé pour aligner un élément allongé (13), qui doit être ajusté avec au moins deux parties d'élément dans deux endroits de montage coaxiaux espacés l'un de l'autre, dans lequel on vérifie la coaxialité des parties d'élément et on mesure un écart existant (a) de la coaxialité, **caractérisé en ce que** l'on produit, dans une région de la surface de l'élément (13) située entre les parties d'élément, au moins une zone de matière fondue (32) limitée radialement et en direction périphérique, avec une grandeur telle que la coaxialité des parties d'élément soit restaurée au moins dans des limites acceptables par le retrait axial se produisant lors du refroidissement de la zone de matière fondue (32).

2. Procédé selon la revendication 1, **caractérisé en ce que** l'on mesure l'écart (a) de la coaxialité en grandeur et en direction radiale et on procède à la réalisation de ladite au moins une zone de matière fondue (32) dans la région de la surface de l'élément (13) diamétrale à la direction mesurée de l'écart (a).

3. Procédé selon la revendication 1 ou 2, **caractérisé en ce que** l'on produit plusieurs zones de matière fondue (32) l'une à côté de l'autre à distance l'une de l'autre en direction périphérique.

4. Procédé selon l'une quelconque des revendications 1 à 3, **caractérisé en ce que** l'on procède à la réalisation de ladite au moins une zone de matière fondue (32) avec un laser.

5. Procédé selon l'une quelconque des revendications 1 à 4, **caractérisé en ce que** l'élément allongé (13) se compose d'au moins deux pièces jointes l'une à l'autre, qui sont assemblées l'une à l'autre par continuité de matière, et **en ce que** l'on réalise ladite au moins une zone de matière fondue (32) à proximité de l'endroit d'assemblage des deux pièces de l'élément.

6. Procédé selon la revendication 5, **caractérisé en ce que** l'on opère la jonction des pièces de l'élément par application bout à bout des faces frontales tournées l'une vers l'autre des pièces de l'élément.

7. Procédé selon la revendication 5, **caractérisé en ce que** l'on opère la jonction des pièces de l'élément par l'emboîtement d'une des pièces de l'élément sur ou dans l'autre pièce de l'élément.

8. Procédé selon l'une quelconque des revendications 5 à 7, **caractérisé en ce que** les pièces de l'élément sont des cylindres creux, comme des tubes ou des douilles.

9. Procédé selon l'une quelconque des revendications 5 à 8, **caractérisé en ce que** l'assemblage par continuité de matière entre les pièces de l'élément est réalisé par soudage.

10. Procédé selon l'une quelconque des revendications 5 à 9, **caractérisé en ce que** l'on utilise comme pièces de l'élément à joindre l'une à l'autre et à assembler par continuité de matière un embout de raccordement cylindrique creux (11) et un support de siège de soupape cylindrique creux (12), qui est entouré localement par un électroaimant (14) avec une enveloppe magnétique (18), d'un injecteur de carburant, et **en ce que** les parties d'élément à ajuster sont associées d'une part à l'extrémité libre de l'embout de raccordement (11) et d'autre part à l'enveloppe magnétique (18) et à l'extrémité du support de siège de soupape (12) située à l'opposé de l'enveloppe magnétique (18).
